# FASCICULE DE BREVET EUROPEEN

(11) **EP 2 549 592 B1**
(45) Date de publication et mention de la délivrance du brevet: **14.05.2014**
(21) Numéro de dépôt: 12354040.3
(22) Date de dépôt: 19.07.2012
(51) Int. Cl.: H01R 4/06, H01R 4/30, F16B 37/06

(54) **Insert à pointes et dispositif mettant en oeuvre l'insert**
Spitzeneinsatz und Vorrichtung, die einen solchen Einsatz umsetzt
Tip insert and device implementing the insert

(30) Priorité: 19.07.2011 FR 1102240
(43) Date de publication de la demande: 23.01.2013
(73) Titulaire: Bollhoff Otalu S.A., 73490 La Ravoire (FR)
(72) Inventeur: Palluel, Frédéric, 73000 Chambéry (FR); Begel, Nicolas, 73000 Chambéry (FR); Frison, Jean Louis, 73220 Randens (FR)
(74) Mandataire: Hecké, Gérard

(56) Documents cités:
- WO-A1-93/00517
- FR-A1- 2 722 258
- US-A- 5 281 153
- US-A- 5 644 830
- US-A1- 2006 056 937

## Description

### Domaine technique de l'invention

L'invention est relative à un insert à sertir muni d'un corps électriquement conducteur comportant un fût et une tête disposée à une extrémité longitudinale du fût, la tête étant munie d'une première face au niveau de laquelle s'élève le fût et d'une seconde face opposée à la première face.

### État de la technique

Dans le domaine des inserts à sertir, il peut, selon les applications, être nécessaire d'assurer la continuité électrique entre un support dans lequel l'insert est serti et/ou un organe monté sur l'insert.

Afin de réaliser un tel montage l'insert comporte en général un fût et une tête disposée à une extrémité longitudinale du fût. La tête est munie d'une première face au niveau de laquelle s'élève le fût, et d'une seconde face opposée à la première face. Des éléments acérés sont en saillie de la première face, lorsque l'insert est serti au support, les éléments acérés viennent pénétrer le support. Cette pénétration permet de réaliser un contact intime entre le corps de l'insert électriquement conducteur et le support.

Pour assurer la continuité électrique entre l'insert et l'organe « une rondelle à griffes », aussi appelée « rondelle à éventail », est interposée entre l'insert et l'organe au cours du montage. Ainsi, lorsque ces deux pièces sont montées l'une sur l'autre, les griffes de la rondelle viennent rayer à la fois l'insert et l'organe. Ces rayures permettent d'obtenir un contact intime entre l'insert et l'organe pour assurer la continuité électrique.

Cependant, si l'objectif de continuité électrique est atteint, les rayures sont générées sur de grandes surfaces de la tête de l'insert et sur une partie correspondante de l'organe. Dès lors, les attaques par des agents corrosifs sont favorisées au niveau des rayures, il résulte de ces attaques une dégradation rapide de l'insert.

On peut citer la demande de brevet américain US 2006/0056937 qui décrit un élément de fixation électriquement conducteur comprenant un tronçon de rivet et une partie de tête comportant deux pattes en saillie et la demande internationale WO 93/00517 qui décrit un insert électriquement conducteur comprenant un corps cylindrique et une tête ayant une face supérieure munie de clous pour augmenter la friction avec un composant monté sur l'insert. Mais les pattes et les clous sont difficiles à réaliser.

### Objet de l'invention

L'objet de l'invention consiste à réaliser un insert qui pourra facilement assurer la continuité électrique entre un support dans lequel il sera serti et un organe monté sur l'insert.

On tend vers cet objet en ce que le corps comporte des pointes au niveau de la seconde face de la tête ayant chacune un sommet relié à la seconde face de la tête par une arête associée, la pente de l'arête par rapport à un plan horizontal défini par la seconde face de la tête étant compris entre 45 degrés et 60 degrés inclus.

L'invention est aussi relative à un dispositif mettant en oeuvre l'insert. Un tel dispositif comprend : un support, préférentiellement électriquement conducteur, muni d'un trou débouchant reliant une première face du support à une deuxième face du support ; un insert muni d'un corps électriquement conducteur comportant un fût et une tête disposée à une extrémité longitudinale du fût, la tête étant munie d'une première face, au niveau de laquelle s'élève le fût, orientée vers la première face du support, le fût comprenant un bourrelet de sertissage en contact avec la seconde face du support ; un organe monté sur l'insert ; et le corps comportant des pointes au niveau d'une seconde face de la tête, opposée à la première face de la tête, au moins une des pointes assurant la continuité électrique entre l'organe et l'insert, et chacune des pointes ayant un sommet relié à la seconde face de la tête par une arête associée, la pente de l'arête par rapport à un plan horizontal défini par la seconde face de la tête étant compris entre 45 degrés et 60 degrés inclus.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
La figure 1 illustre en trois dimensions un mode de réalisation d'un insert,
La figure 2 illustre une vue de côté de l'insert de la figure 1,
La figure 3 illustre schématiquement une vue de côté de la tête d'un insert centrée sur une pointe formée par emboutissage,
La figure 4 illustre une coupe de l'insert réalisée dans un plan parallèle au plan de la figure 2,
La figure 5 illustre vu en coupe un insert et son support avant sertissage,
La figure 6 illustre vu en coupe l'insert reporté dans un trou du support,
La figure 7 illustre vu en coupe l'insert serti au support,
La figure 8 illustre vu en coupe un organe monté sur l'insert et en continuité électrique avec l'insert et le support.

### Description de modes préférentiels de réalisation

L'insert décrit ci-après diffère de l'art antérieur en ce que des pointes sont prévues sur une face de la tête opposée à la face où s'élève le fût de sorte à réaliser des éléments ponctuels destinés à pénétrer au moins en partie dans un organe associé monté sur l'insert pour assurer la continuité électrique entre l'insert et l'organe à la place de la rondelle à griffes de l'art antérieur. L'utilisation de pointes permet avantageusement de limiter les griffures réalisées au niveau de l'insert contrairement à l'art antérieur.

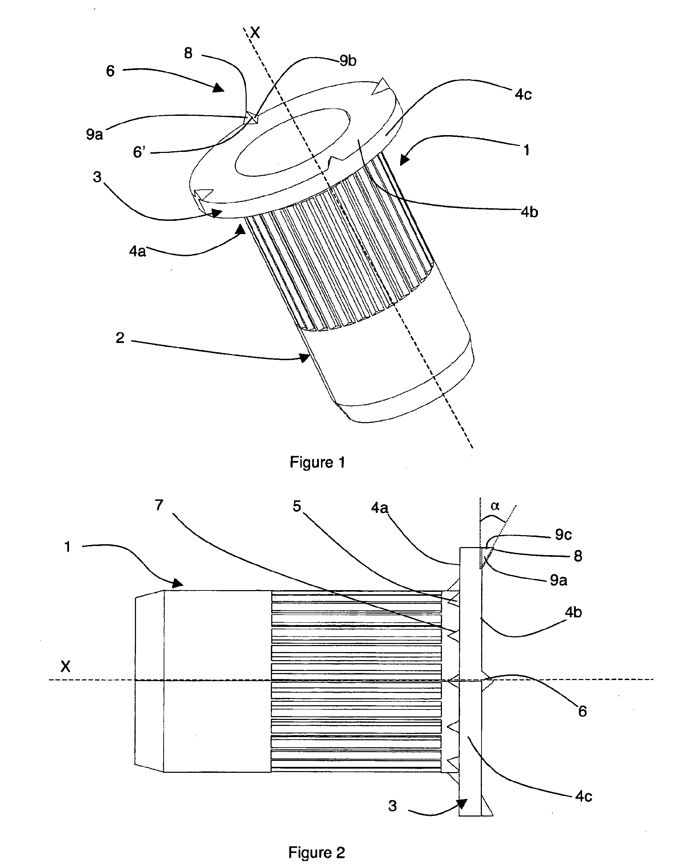

Comme illustré aux figures 1 et 2, l'insert à sertir est muni d'un corps 1 électriquement conducteur comportant un fût 2 et une tête 3 disposée à une extrémité longitudinale du fût 2. La tête 3 est munie d'une première face 4a au niveau de laquelle s'élève le fût 2 et d'une seconde face 4b opposée à la première face 4a. Ces première et seconde faces 4a, 4b peuvent être reliées par une troisième face 4c formant un rebord de la tête 3.

Le corps 1 comporte des pointes 6 au niveau de la seconde face 4b. En fait, ces pointes 6 font saillie de la seconde face 4b, et sont destinées à assurer la continuité électrique avec le futur organe monté sur l'insert. En fait, la seconde face 4b et les pointes 6 forment une extrémité libre de l'insert selon l'axe longitudinal X. L'axe longitudinal X de l'insert coïncide avec l'axe longitudinal du fût 2.

Préférentiellement, le corps 1 comporte des éléments 5 en saillie au niveau de la première face 4a de la tête 3. Lors d'un sertissage de l'insert, la première face 4a est destinée à être orientée vers le support où l'insert sera serti, et les éléments en saillie 5, préférentiellement acérés, sont destinés à réaliser la continuité électrique entre le corps 1 de l'insert et le support préférentiellement électriquement conducteur. Ces éléments en saillie 5 ne sont pas toujours nécessaires car lors du sertissage le bourrelet de sertissage associé peut lui aussi assurer, le cas échéant, une fonction de continuité électrique.

Le fût 2 peut présenter une section quelconque, par exemple de forme circulaire tant intérieurement qu'extérieurement, dans un plan perpendiculaire à sa direction axiale repérée X. Le fût 2 est préférentiellement un cylindre, et la tête 3 forme une collerette s'étendant radialement, par rapport à la surface extérieure du fût 2. La tête peut, comme illustré, être formée dans un plan sensiblement perpendiculaire à l'axe X du fût 2.

Selon une mise en oeuvre particulière, les éléments 5 en saillie forment chacun une nervure qui comporte une arête 7 unique reliant la première face 4a de la tête 3 à un point de la surface extérieure du fût 2 en direction de l'extrémité du fût 2 opposée à la tête 3. Selon cette mise en oeuvre, un élément 5 en saillie peut comporter deux pans dont l'intersection coïncide avec l'arête 7, ces pans relient en outre chacun la première face 4a et le fût 2. Ainsi, l'élément 5 en saillie peut être uniquement délimité par l'arête 7 et les deux pans. Sur la figure 2, les pans sont délimités par des faces extérieures de l'élément 5 en saillie considéré. Ces pans divergent de l'arête unique 7 en direction de l'intersection entre le fût 2 et la tête 3. Ainsi, la section de la nervure est alors triangulaire dans tout plan perpendiculaire à l'axe longitudinal X au niveau de ladite nervure. Ces deux pans sont sensiblement plats et l'angle de divergence est compris entre 50 degrés et 60 degrés. Un tel angle permet à élément 5 en saillie d'être suffisamment acéré pour pénétrer facilement un support auquel il sera serti.

Selon un mode de réalisation, les pointes 6 sont réparties au niveau de la périphérie de la seconde face 4b de la tête 3. L'avantage de cette disposition est de permettre le report d'un outil de sertissage comprenant une enclume prenant appui sur la seconde face 4b de la tête 3 dans une surface de la seconde face 4b inscrite entre les pointes, et comprenant une tige de traction apte à déformer le fût 2 pour réaliser le sertissage. Avantageusement, les pointes 6 ont chacune un sommet 8 relié à la seconde face 4b par une arête 6' associée, la pente α de l'arête 6' par rapport à un plan horizontal défini par la seconde face 4b de la tête 3 étant comprise entre 45 degrés et 60 degrés inclus. Un tel angle de pente permet de réaliser un élément assez vif, en particulier lorsque sa hauteur (distance sommet/seconde face) est d'environ 4mm. Sur la figure 2, l'arête 6' reliant le sommet 8 à la seconde face 4b de la tête est orientée, à partir du sommet 8 en direction de l'axe longitudinal X du fût 2. Ainsi, les axes passant respectivement par chaque arête se coupent tous en un même point. En fait, chaque pointe 6 peut comporter trois parois extérieures 9a, 9b, 9c, deux parois 9a, 9b (figure 1) étant séparés par l'arête 6' reliant le sommet 8 à la seconde face 4b de la tête 3, et la dernière paroi 9c (figure 2) étant formée en continuité du rebord extérieur 4c de la tête 3. En fait ceci est du au fait qu'il est plus aisé de déformer la tête en forme de collerette sur son bord extérieur de sorte à former les pointes. Sur les figures 1 et 2, le rebord extérieur 4c de la tête 3 relie les deux faces opposées 4a, 4b.

Préférentiellement, la seconde face 4b de la tête 3 est plane et les pointes ont toutes la même hauteur. Ceci permet, lorsqu'un organe est monté sur l'insert, que toutes les pointes 6 soient en contact avec l'organe pour assurer un montage sans jeu mécanique. De plus, dans ce cas particulier les forces exercées sur l'organe seront réparties sur toutes les pointes, améliorant la liaison du montage entre l'insert et l'organe.

Le corps de l'insert peut être recouvert d'un revêtement de protection préférentiellement électriquement isolant. En fait, ce revêtement de protection permet d'éviter les potentiels électriques galvaniques entre deux matériaux divers générant de la corrosion. Ce revêtement permet notamment de protéger le corps de l'insert pour en éviter la corrosion. Un tel revêtement sera avantageusement détruit localement par frottement au niveau d'un élément 5 en saillie lors du sertissage et au niveau d'une pointe 6 par frottements entre l'insert et l'organe lors du montage.

L'insert peut être fabriqué par toute technique adaptée, par exemple réalisé en frappe à froid ou par moulage.

Les pointes 6 peuvent être obtenues par emboutissage ou par fluage de matière dans une partie positive d'un outil par matriçage.

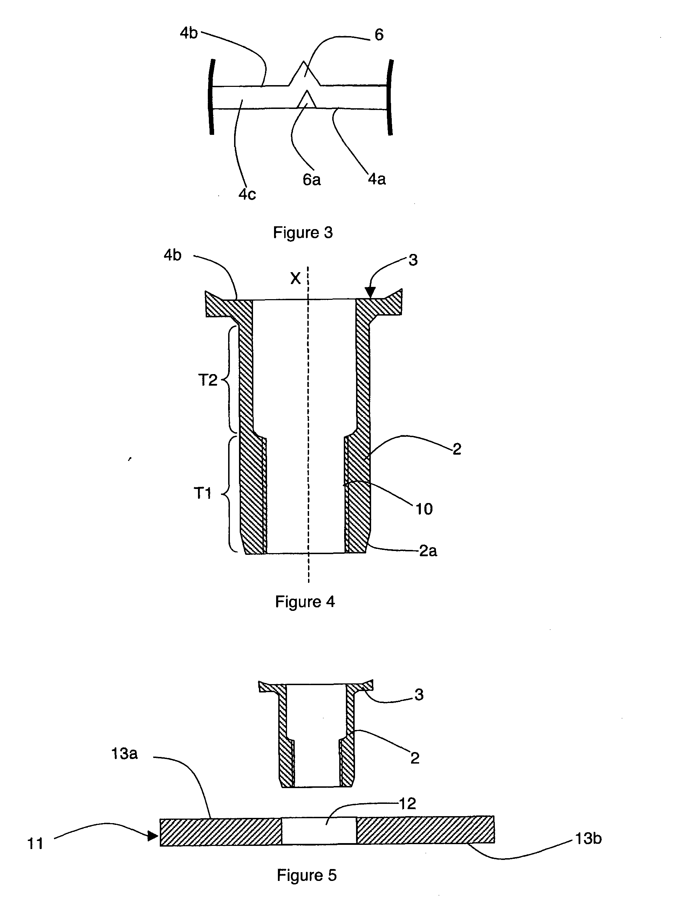

Pour des raisons facilitant la fabrication de l'insert, les pointes 6 seront préférentiellement obtenues par emboutissage. Il résulte de la fabrication par emboutissage que pour chaque pointe 6, la tête 3 comporte au niveau de la première face 4a de la tête 3 une forme en creux 6a complémentaire de la forme la pointe 6 associée comme illustré à la figure 3 qui représente schématiquement une vue de la tête 3 centrée sur une portion de ladite tête et orientée vers le rebord extérieur 4c.

L'insert peut être débouchant ou borgne du côté de l'extrémité opposée à la tête 3. Autrement dit, la seconde face 4b est trouée par un trou traversant la tête 3, et se continuant au moins en partie dans le fût selon l'axe longitudinal X.

Comme illustré à la figure 4, le fût 2 peut être subdivisé axialement (selon l'axe X) en un tronçon taraudé T1 de réception de l'organe par vissage (non représenté) et en un tronçon de sertissage T2 adjacent à la tête 3 destiné à se déformer pour former un bourrelet après une opération de sertissage. Pour cela, le tronçon T2 peut présenter une plus grande déformabilité que le tronçon T1 et la tête 3. Autrement dit, le tronçon de sertissage T2 présente une zone de plus grande déformabilité susceptible de se déformer sous un effort axial qui n'engendrerait pas de déformation du tronçon taraudé T1. L'épaisseur de la paroi constitutive du tronçon de sertissage T2 est, par exemple, inférieure à celle du tronçon taraudé T1, de manière à permettre la déformation de la matière constitutive de la paroi du tronçon de sertissage T2 par application d'un effort axial de compression au tronçon de sertissage T2. Le taraudage 10 constitue la partie active de l'insert après sertissage en ayant pour rôle de subir sans déformation les efforts axiaux appliqués à un organe normalisé (non représentée) introduit dans l'insert, préférentiellement par la seconde face 4b et vissée dans le taraudage 10. L'extrémité du fût 2 opposée à la tête 3 comporte préférentiellement un chanfrein 2a destiné à faciliter l'insertion de l'insert par le chanfrein 2a dans un trou du support en vue du sertissage. Dans le but de réaliser le sertissage, les dimensions extérieures du fût sont légèrement inférieures aux dimensions du trou du support.

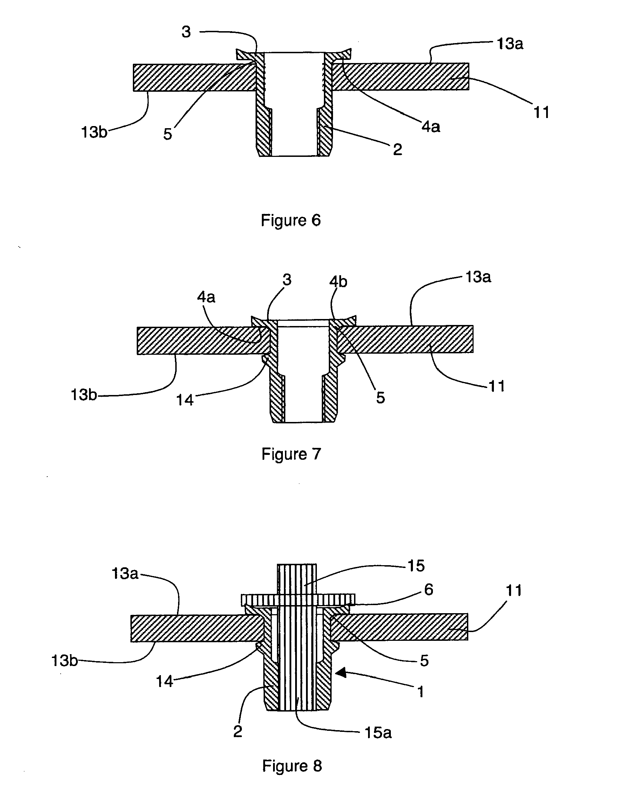

Comme illustré aux figures 5 à 8, l'insert tel que décrit ci-dessus est destiné à être serti à un support 11, préférentiellement électriquement conducteur, muni d'un trou 12 débouchant reliant une première face 13a du support 11 à une deuxième face 13b du support 11. Sur la figure 5, l'insert est reporté au niveau du trou 12 du support 11. L'insert est ensuite introduit dans le trou 12 par l'extrémité du fût 2 opposée à la tête 3 pour obtenir comme sur la figure 6 un insert en place dans le support 11 avant sertissage. Sur la figure 6, on voit que les éléments 5 en saillie forment, préférentiellement, des butées empêchant le contact de la première face 4a de la tête 3 avec la première face 13a du support 11.

La figure 7 illustre l'insert serti avec le support 11 au niveau du trou. Le sertissage a, par exemple, pu être réalisé en utilisant une enclume, prenant appui sur la seconde face 4b de la tête, et traversée par une tige vissée dans le taraudage de l'insert, la tige ayant été tractée dans une direction opposée à la direction d'appui de l'enclume pour comprimer le tronçon de sertissage de l'insert. Une fois l'insert serti, la première face 4a de la tête 3 est orientée vers, avec ou sans contact (dans le cas sans contact ce sont les éléments 5 en saillie qui assurent le contact), la première face 13a du support 11, et le fût 2 comprend un bourrelet de sertissage 14 en contact avec la seconde face 13b du support. Préférentiellement, au moins un élément 5 en saillie est en contact avec le support 11 et assure la continuité électrique avec ledit support 11. Bien entendu, comme indiqué précédemment, la présence des éléments 5 en saillie n'est pas indispensable, lorsque les éléments en saillie sont présents, le support est électriquement conducteur de sorte à obtenir la continuité électrique entre ces deux derniers.

Sur la figure 8, un organe 15 électriquement conducteur est monté sur l'insert, par exemple par vissage d'une tige 15a de l'organe dans le taraudage du fût 2. Au moins une des pointes 6 de l'insert assure la continuité électrique entre l'organe 15 et le corps 1 de l'insert. Préférentiellement, toutes les pointes 6 assurent la continuité électrique entre l'insert et l'organe, et dans la variante avec les éléments 5 tous ces derniers assurent la continuité électrique entre l'insert et le support. Autrement dit, au moins une des pointes 6 pénètre au moins en partie dans l'organe 15.

En fait sur la figure 8, au moins un des éléments 5 en saillie pénètre au moins partiellement dans le support 11 et au moins une des pointes pénètre au moins en partie dans l'organe 15. Ainsi, l'organe 15 comporte une partie 15b conformée pour venir en contact avec la ou les pointes lors du montage de l'organe sur l'insert.

Afin d'éviter la corrosion du support, ce dernier peut être recouvert d'un revêtement de surface de protection, au moins un des éléments 5 en saillie traverse ce revêtement de surface de protection. De préférence, tous les éléments 5 traversent le revêtement de surface de protection.

De la même manière, l'organe 15 peut aussi être recouvert d'un revêtement de surface de protection, au moins une des pointes traverse ce revêtement de surface de protection. De préférence, toutes les pointes traversent le revêtement de surface de protection de l'organe tiers.

Dans le cas où le corps de l'insert est aussi recouvert d'un revêtement de protection, ce dernier est retiré au moins localement par le frottement induit par le sertissage d'une part et par le montage insert/organe d'autre part.

En fait, le revêtement de surface de protection a préférentiellement les mêmes propriétés que le revêtement de protection du corps de l'insert visé précédemment.

Grâce aux présents développements, il est possible d'assurer la continuité électrique par contact intime dû à la pénétration d'un matériau métallique dans un autre. Les tests électriques ont permis de mettre en avant que la résistivité était ainsi abaissée.

Grâce à l'insert à pointes, il est possible de monter et de démonter plusieurs fois l'organe, par exemple pour le changer, sans abîmer la seconde face de la tête de l'insert.

Préférentiellement, pour former le corps de l'insert on utilisera un matériau moins malléable que le matériau du support et que le matériau de l'organe. Ceci permet de faciliter la pénétration des pointes, et le cas échéant des éléments en saillie, sans trop abîmer les pointes/éléments en saillie.

De plus, l'utilisation de pointes permet « d'abîmer » ponctuellement l'organe associé, en limitant les rayures de l'organe et, le cas échéant la dégradation du revêtement de l'organe, on limite les dégradations dues à la corrosion.

Typiquement, l'insert pourra être utilisé dans des châssis métalliques, assimilables au support, dans lesquels de nombreux composants électriques ou électroniques seront assemblés. Dès lors, la mise en continuité électrique évoquée ci-dessus permettra de faciliter la mise à la masse des composants.

De plus l'insert évoqué ci-dessus peut avantageusement être serti en aveugle, c'est-à-dire dans un support dont une seule des faces est accessible par l'outillage ou l'opérateur de montage.

L'insert comporte de préférence des rainures longitudinales formées au niveau du tronçon de sertissage, ces rainures permettent un effet antirotation de l'insert sur lui-même après sertissage.

## Revendications

1. Insert à sertir muni d'un corps (1) électriquement conducteur comportant un fût (2) et une tête (3) disposée à une extrémité longitudinale du fût (2), la tête (3) étant munie d'une première face (4a) au niveau de laquelle s'élève le fût (2) et d'une seconde face (4b) opposée à la première face (4a), le corps (1) comportant des pointes (6) au niveau de la seconde face (4b) de la tête (3),
**caractérisé en ce que** les pointes (6) ont chacune un sommet (8) relié à la seconde face (4b) de la tête (3) par une arête (6') associée, la pente de l'arête (6') par rapport à un plan horizontal défini par la seconde face (4b) de la tête (3) étant compris entre 45 degrés et 60 degrés inclus.

2. Insert selon la revendication 1, **caractérisé en ce que** le corps (1) comporte des éléments (5) en saillie au niveau de la première face (4a) de la tête (3).

3. Insert selon la revendication 2, **caractérisé en ce que** les éléments (5) en saillie forment chacun une nervure comportant une arête (7) unique reliant la première face (4a) de la tête (3) à un point de la surface extérieure du fût (2) en direction de l'extrémité du fût opposée à la tête (3).

4. Insert selon la revendication 1, **caractérisé en ce que** les pointes (6) sont réparties au niveau de la périphérie de la seconde face (4b) de la tête (3).

5. Insert selon la revendication 4, **caractérisé en ce que** chaque pointe (6) comporte trois parois (9a, 9b, 9c) extérieures, deux parois (9a, 9b) étant séparés par l'arête (6') reliant le sommet (8) à la seconde face (4b) de la tête (3) et la dernière paroi (9c) étant formée en continuité du rebord extérieur (4c) de la tête (3) reliant les première et seconde (faces 4a, 4b) de la tête (3).

6. Insert selon l'une quelconque des revendications précédentes **caractérisé en ce que** le corps (1) est recouvert d'un revêtement de protection.

7. Insert selon l'une quelconque des revendications précédentes **caractérisé en ce que** pour chaque pointe (6), la tête (3) comporte au niveau de sa première face (4a) une forme en creux (6a) complémentaire de la forme de la pointe (6) associée.

8. Dispositif comprenant :
- un support (11) muni d'un trou (12) débouchant reliant une première face (13a) du support (11) à une deuxième face (13b) du support (11)
- un insert selon la revendication 1, muni d'un corps (1) électriquement conducteur comportant un fût (2) et une tête (3) disposée à une extrémité longitudinale du fût (2), la tête (3) étant munie d'une première face (4a), au niveau de laquelle s'élève le fût (2), orientée vers la première face (13a) du support (11), le fût (2) comprenant un bourrelet (14) de sertissage en contact avec la seconde face (13b) du support (11), le corps (1) de l'insert comportant des pointes (16) au niveau d'une seconde face (4b) de la tête (3), opposée à la première face (4a) de la tête (3), au moins une des pointes (6) assurant la continuité électrique entre l'organe (15) et le corps de l'insert,
- un organe électriquement conducteur (15) monté sur l'insert, **caractérisé en ce que** les pointes (6) ont chacune un sommet (8) relié à la seconde face (4b) de la tête (3) par une arête (6') associée, la pente de l'arête (6') par rapport à un plan horizontal défini par la seconde face (4b) de la tête (3) étant compris entre 45 degrés et 60 degrés inclus.

9. Dispositif selon la revendication 8, **caractérisé en ce que** le corps (1) de l'insert comporte des éléments (5) en saillie de la première face (4a) de la tête (3), au moins un des éléments (5) en saillie assurant la continuité électrique avec ledit support (11), électriquement conducteur.

10. Dispositif selon les revendications 8 et 9, **caractérisé en ce que** au moins un des éléments (5) en saillie pénètre au moins partiellement dans le support (11) et **en ce que** au moins une des pointes (16) pénètre au moins en partie dans l'organe (15).

11. Dispositif selon l'une des revendications 9 à 10, **caractérisé en ce que** le support (11) comporte un revêtement de surface de protection, les éléments (5) en saillie traversant ce revêtement.

12. Dispositif selon l'une des revendications 8 ou 10, **caractérisé en ce que** l'organe (15) comporte un revêtement de surface de protection, les pointes (16) traversant ce revêtement.

## Patentansprüche

1. Einsatz zum Einsetzen, der mit einem elektrisch leitenden Körper (1) versehen ist, der einen Schaft (2) und einen Kopf (3) umfasst, der an einem Längsende des Schafts (2) angeordnet ist, wobei der Kopf (3) mit einer ersten Seite (4a) versehen ist, von der aus der Schaft (2) ausgeht, sowie mit einer zweiten Seite (4b), die entgegengesetzt zur ersten Seite (4a) ist, wobei der Körper (1) in Höhe der zweiten Seite (4b) des Kopfes (3) Spitzen (6) aufweist, **dadurch gekennzeichnet, dass** die Spitzen (6) jeweils einen höchsten Punkt (8) haben, der mit der zweiten Seite (4b) des Kopfes (3) über eine zugehörige Kante (6') verbunden ist, wobei die Neigung der Kante (6') bezüglich einer horizontalen Ebene, die von der zweiten Seite (4b) des Kopfes (3) definiert wird, 45 bis 60 Grad beträgt.

2. Einsatz nach Anspruch 1, **dadurch gekennzeichnet, dass** der Körper (1) Elemente (5) umfasst, die in Höhe der ersten Seite (4a) des Kopfes (3) herausstehen.

3. Einsatz nach Anspruch 2, **dadurch gekennzeichnet, dass** die herausstehenden Elemente (5) jeweils eine Rippe bilden, die eine einzige Kante (7) umfasst, die die erste Seite (4a) des Kopfes (3) mit einem Punkt der Außenfläche des Schafts (2) in Richtung des dem Kopf (3) entgegengesetzten Endes verbindet.

4. Einsatz nach Anspruch 1, **dadurch gekennzeichnet, dass** die Spitzen (6) im Bereich des Umfangs der zweiten Seite (4b) des Kopfes (3) verteilt sind.

5. Einsatz nach Anspruch 4, **dadurch gekennzeichnet, dass** jede Spitze (6) drei Außenwände (9a, 9b, 9c) hat, wobei zwei Wände (9a, 9b) durch die Kante (6') voneinander getrennt sind, die den höchsten Punkt (8) mit der zweiten Seite (4b) des Kopfes (3) verbindet, und wobei die letzte Wand (9c) in Verlängerung des Außenrandes (4c) des Kopfes (3) gebildet ist, der die erste und zweite Seite (4a, 4b) des Kopfes (3) miteinander verbindet.

6. Einsatz nach einem der vorstehenden Ansprüche, **dadurch gekennzeichnet, dass** der Körper (1) mit einer Schutzbeschichtung versehen ist.

7. Einsatz nach einem der vorstehenden Ansprüche, **dadurch gekennzeichnet, dass** der Kopf (3) für jede Spitze (6) auf Höhe seiner ersten Seite (4a) eine ausgehöhlte Form (6a) hat, die komplementär zur Form der zugehörigen Spitze (6) ist.

8. Vorrichtung, die umfasst:
einen Träger (11), der mit einer mündenden Öffnung (12) versehen ist,
die eine erste Seite (13a) des Trägers (11) mit einer zweiten Seite (13b) des Trägers (11) verbindet,
- einen mit einem elektrisch leitenden Körper (1) versehen Einsatz, der einen Schaft (2) und einen Kopf (3) umfasst, der an einem Längsende des Schafts (2) vorgesehen ist, wobei der Kopf (3) eine erste Seite (4a) aufweist, von der der Schaft (2) ausgeht und die zur ersten Seite (13a) des Trägers (11) gewandt ist, wobei der Schaft (2) eine Wulst (14) zum Einsetzen umfasst, die in Kontakt mit der zweiten Seite (13b) des Trägers (11) ist, wobei der Körper (1) des Einsatzes im Bereich einer zweiten, zur ersten Seite (4a) des Kopfes (3) entgegengesetzten Seite (4b) des Kopfes (3) Spitzen (6) umfasst und mindestens eine der Spitzen (6) den Stromfluss zwischen dem Element (15) und dem Körper des Einsatzes sicherstellt.
- ein an den Einsatz montiertes elektrisch leitendes Element (15), **dadurch gekennzeichnet, dass** die Spitzen (6) jeweils einen höchsten Punkt (8) aufweisen, der mit der zweiten Seite (4b) des Kopfes (3) über eine entsprechende Kante (6') verbunden ist, wobei die Neigung der Kante (6') bezüglich einer von der zweiten Seite (4b) des Kopfes (3) definierten horizontalen Ebene 45 bis 60 Grad beträgt.

9. Vorrichtung nach Anspruch 8, **dadurch gekennzeichnet, dass** der Körper (1) des Einsatzes aus der ersten Seite (4a) des Kopfes (3) herausstehende Elemente (5) umfasst, wobei mindestens eines der herausstehenden Elemente (5) den Stromfluss mit dem elektrisch leitenden Träger (11) sicherstellt.

10. Vorrichtung nach Anspruch 8 und 9, **dadurch gekennzeichnet, dass** bei der mindestens eines der herausstehenden Elemente (5) zumindest teilweise in den Träger (11) hineinreicht, sowie dadurch, dass mindestens eine der Spitzen (6) zumindest teilweise in das Teil (15) eindringt.

11. Vorrichtung nach einem der Ansprüche 9 bis 10, **dadurch gekennzeichnet, dass** der Träger (11) eine Oberflächenschutzbeschichtung aufweist und die herausstehenden Elemente (5) durch diese Beschichtung hindurchgeführt sind.

12. Vorrichtung nach einem der Ansprüche 8 oder 10, **dadurch gekennzeichnet, dass** das Teil (15) eine Oberflächenschutzbeschichtung aufweist und die Spitzen (16) durch diese Schutzbeschichtung hindurch führen.

## Claims

1. Insert to be crimped provided with an electrically conducting body (1) comprising a shank (2) and a head (3) arranged at a longitudinal end of the shank (2), the head (3) being provided with a first face (4a) at which the shank (2) is rising, and with a second face (4b) opposite the first face (4a), the body (1) comprising tips (6) at the level of the second face (4b) of the head (3), **characterized in that** the tips (6) each have an apex (8) connected to the second face (4b) of the head (3) by an associated edge (6'), the slope of the edge (6') with respect to a horizontal plane defined by the second face (4b) of the head (3) being comprised between 45 degrees and 60 degrees inclusive.

2. Insert according to claim 1, **characterized in that** the body (1) comprises salient elements (5) at the level of the first face (4a) of the head (3).

3. Insert according to claim 2, **characterized in that** the salient elements (5) each form a rib comprising a single edge (7) connecting the first face (4a) of the head (3) to a point of the outer surface of the shank (2) in the direction of the end of the shank opposite the head (3).

4. Insert according to claim 1, **characterized in that** the tips (6) are arranged at the level of the periphery of the second face (4b) of the head (3).

5. Insert according to claim 4, **characterized in that** each tip (6) comprises three outer walls (9a, 9b, 9c), two walls (9a, 9b) being separated by the edge (6') connecting the apex (8) to the second face (4b) of the head (3) and the last wall (9c) being formed in continuity of the outer edge (4c) of the head (3) connecting the first and second faces (4a, 4b) of the head (3).

6. Insert according to any one of foregoing claims, **characterized in that** the body (1) is covered by a protective coating.

7. Insert according to any one of foregoing claims, **characterized in that** for each tip (6), the head (3), at the level of its first face (4a), comprises a hollow shape (6a) complementary to the shape of the associated tip (6).

8. Device comprising:
- a support (11) provided with a pass-through hole (12) connecting a first face (13a) of the support (11) to a second face (13b) of the support (11),
- an insert according to claim 1, provided with an electrically conducting body (1) comprising a shank (2) and a head (3) arranged at a longitudinal end of the shank (2), the head (3) being provided with a first face (4a) at which the shank (2) is rising, oriented towards the first face (13a) of the support (11), the shank (2) comprising a crimping rim (14) in contact with the second face (13b) of the support (11), the body (1) of the insert comprising tips (16) at the level of a second face (4b) of the head (3), opposite the first face (4a) of the head (3), at least one of the tips (6) ensuring the electric continuity between the member (15) and the body of the insert,
- an electrically conducting member (15) fitted on the insert,
**characterized in that** the tips (6) each have an apex (8) connected to the second face (4b) of the head (3) by an associated edge (6'), the slope of the edge (6') with respect to a horizontal plane defined by the second face (4b) of the head (3) being comprised between 45 degrees and 60 degrees inclusive.

9. Device according to claim 8, **characterized in that** the body (1) of the insert comprises elements (5) salient from the first face (4a) of the head (3), at least one of the salient elements (5) ensuring the electric continuity with said electrically conducting support (11).

10. Device according to claims 8 and 9, **characterized in that** at least one of the salient elements (5) penetrates at least partially into the support (11) and **in that** at least one of the tips (16) penetrates at least partially into the member (15).

11. Device according to one of claims 9 to 10, **characterized in that** the support (11) comprises a protective surface coating, the salient elements (5) passing through this coating.

12. Device according to one of claims 8 or 10, **characterized in that** the member (15) comprises a protective surface coating, the tips (16) passing through this coating.
